# FASCICULE DE BREVET EUROPEEN

(11) **EP 0 980 822 B1**
(45) Date de publication et mention de la délivrance du brevet: **30.07.2003**
(21) Numéro de dépôt: 99402079.0
(22) Date de dépôt: 17.08.1999
(51) Int. Cl.: B64C 1/00, B64C 25/14

(54) **Structure avant d'avion**
Flugzeugstirnstruktur
Forward structure of an aeroplane

(30) Priorité: 19.08.1998 FR 9810550
(43) Date de publication de la demande: 23.02.2000
(73) Titulaire: AIRBUS France, 31060 Toulouse Cedex 03 (FR)
(72) Inventeur: Chaumel, Pascal, 31830 Plaisance Du Touch (FR); Dazet, Francis, 31140 Saint Alban (FR)
(74) Mandataire: Poulin, Gérard

(56) Documents cités:
- FR-A- 2 667 042
- US-A- 3 877 665
- US-A- 4 674 712
- US-A- 5 482 228

## Description

### Domaine technique

L'invention concerne une structure avant d'avion, particulièrement adaptée aux avions commerciaux gros porteurs et très gros porteurs.

### Etat de la technique

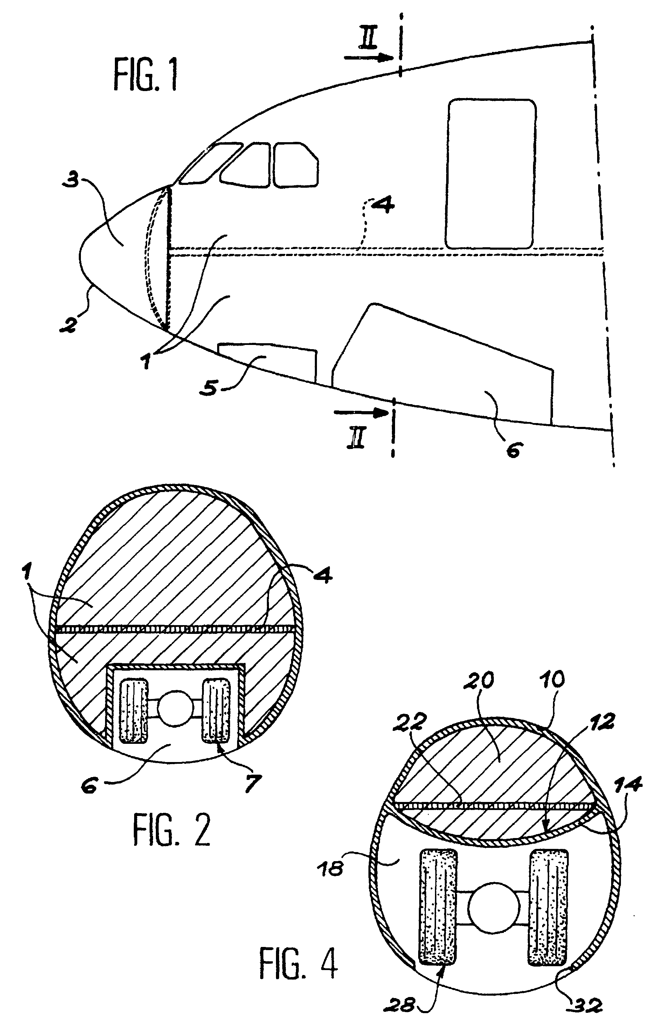

Actuellement, et comme l'illustrent très schématiquement les figures 1 et 2, la structure avant d'un avion gros porteur comprend un compartiment pressurisé 1, prolongé à l'avant par un radôme 2 dans lequel est définie une chambre radar 3. A l'intérieur du compartiment pressurisé 1, un plancher plan 4 soutient notamment le cockpit et les agencements commerciaux. Une porte ou des portes d'accès 5 peuvent être prévues sous le fuselage dans la zone pressurisée, derrière la chambre radar 3, pour permettre au personnel au sol de pénétrer dans la partie du compartiment pressurisé 1 située en dessous du plancher 4, afin d'y effectuer les opérations de maintenance habituelles.

Dans la zone pressurisée 5, une case de train 6 non pressurisée, est ménagée à l'intérieur du fuselage, pour recevoir le train d'atterrissage avant 7, dans sa position rentrée. La case de train 6 est séparée du compartiment pressurisé 1 par un certain nombre de cloisons. Ces cloisons comportent notamment deux cloisons latérales sensiblement verticales, une cloison avant, une cloison arrière ainsi qu'un plafond souvent incliné, vers le bas en allant de l'avant vers l'arrière, lorsque les roues se trouvent devant les ferrures d'ancrage de la jambe de l'atterrisseur en position rentrée.

Suivant les avions, on constate que les concepteurs cherchent généralement à minimiser les dimensions de la case de train par des géométries plus ou moins complexes ou élaborées, de manière à augmenter, entre autre, le volume disponible dans la zone pressurisée. Toutefois, dans toutes ces conceptions, l'agencement de la structure avant reste classique et les autres problèmes demeurent.

Cet agencement classique de la structure avant des avions commerciaux est également préconisé par Chun Yung Niu dans l'ouvrage "Airframe Structural Design", page 400, figures 11.4.3 et 11.4.4, qui fait référence en matière de structure aéronautique.

Cependant, cet agencement traditionnel présente un certain nombre d'inconvénients.

Ainsi, l'accès à la chambre radar 3 n'est possible que par l'extérieur, en démontant le radôme 2. Cette opération, indispensable pour toute action de maintenance, de réparation ou de test sur l'antenne du radar, sollicite à chaque fois le système de vis et/ou de charnières au moyen duquel le radôme 2 est fixé à l'avion. Cela impose de conserver un jeu fonctionnel dans le système de fixation du radôme. Par conséquent, les désaffleurements inévitables entre les bords du radôme 2 et la structure de l'avion sont importants ou non négligeables, situés en zone critique. Cela entraîne une traînée aérodynamique parasite et peut perturber les prises d'air anémométriques situées à proximité du radôme.

Par ailleurs, les portes d'accès 5 par lesquelles le personnel au sol pénètre dans la partie inférieure du compartiment pressurisé 1, donne sur l'extérieur de l'avion. Les désaffleurements, qui existent inévitablement entre cette porte et la structure de l'avion, induisent également de la traînée aérodynamique pénalisante pour l'avion.

Un autre inconvénient de l'agencement habituel de la structure avant des avions découle de la géométrie de la case de train 6. En effet, les espaces formés entre les parois de l'avion et les parois latérales de la case de train sont souvent exigus et, par conséquent, peu exploitables. Cependant, ces volumes sont pressurisés et nécessitent des renforts structuraux pour reprendre la pressurisation.

Enfin, la conception habituelle de la case de train 6 limite le volume disponible notamment pour les roues et les pneumatiques du train d'atterrissage avant 7, et en particulier peut interdire de monter des roues plus grosses lors des évolutions de l'avion. Dans le cas d'un avion très gros porteur, dont la masse maximale au décollage serait par exemple supérieure à 500 tonnes, les contraintes que doit supporter le train d'atterrissage avant conduisent à donner aux roues et aux pneumatiques de ce train des dimensions qui ne sont plus compatibles avec une case de train ainsi conçue.

### Exposé de l'invention

L'invention a précisément pour objet une structure avant d'avion, dont la conception totalement originale lui permet de résoudre tous les problèmes posés par les structures avant de conception traditionnelle.

Ainsi, la structure avant d'avion conforme à l'invention permet de supprimer la porte d'accès donnant sur l'extérieur et de diminuer très sensiblement la fréquence des démontages du radôme limitée aux besoins d'interventions sur le radôme lui-même ou sur la structure environnante. Cela se traduit par une amélioration sensible des caractéristiques aérodynamiques de l'avion.

La structure avant conforme à l'invention permet aussi d'adapter sans difficulté le volume disponible dans la case de train aux dimensions des roues et des pneumatiques du train d'atterrissage avant imposées par une augmentation de la masse de l'avion au décollage.

Conformément à l'invention, ces différents résultats sont obtenus au moyen d'une structure avant d'avion, comprenant un compartiment pressurisé et une case de train non pressurisée, apte à loger un train d'atterrissage avant, dans un état rentré de celui-ci, caractérisée en ce que la case de train non pressurisée forme une partie inférieure extrême avant de ladite structure avant.

En d'autres termes, la case de train se prolonge sous le cockpit jusqu'à la pointe avant de l'avion. Elle n'est donc plus séparée du compartiment pressurisé que par un plafond et une cloison arrière.

Dans un mode de réalisation préféré de l'invention, la case de train comporte une extension vers l'arrière, au-delà de la cloison arrière. Le train d'atterrissage avant est alors articulé dans ladite extension vers l'arrière, de façon à s'étendre vers l'avant dans la case de train, lorsqu'il est dans son état rentré.

L'extension vers l'arrière de la case de train est délimitée par des cloisons latérales qui peuvent être soit sensiblement verticales soit, de préférence, inclinées de façon à se rapprocher vers le haut.

On donne, de préférence, au plafond de la case de train une forme bombée vers le bas. Cette caractéristique permet au plafond de supporter la différence de pression qui existe entre ses deux faces, sans qu'il soit nécessaire d'augmenter sa masse de façon irréaliste.

Pour permettre d'accéder à la partie du compartiment pressurisé située derrière la case de train sans pénaliser le comportement aérodynamique de l'avion, on prévoit avantageusement au moins une porte d'accès dans la cloison arrière de la case de train. Cette porte d'accès peut notamment avoir une forme sensiblement ovale, de grand axe vertical, pour une meilleure tenue structurale de l'ensemble.

Une amélioration de la tenue structurale est également obtenue en équipant le plafond et la cloison arrière de raidisseurs.

Afin d'éviter une dépose trop fréquente du radôme, qui entraînerait les problèmes de désaffleurement connus avec les technologies de radôme mobile et par suite accroissement de la traînée aérodynamique, on prévoit avantageusement au moins une ouverture d'accès à la chambre radar, dans une cloison avant séparant cette chambre de la case de train.

La ou les roues du train d'atterrissage avant sont alors situées à proximité de cette cloison avant, lorsque le train est dans son état rentré.

Enfin, afin d'améliorer la sécurité du personnel au sol qui intervient dans la case de train, une rambarde et/ou un filet anti-éclatement est avantageusement placée à l'intérieur de celle-ci.

### Brève description des dessins

On décrira à présent, à titre d'exemple non limitatif, un mode de réalisation préféré de l'invention, en se référant aux dessins annexés, dans lesquels :
- la figure 1, déjà décrite, est une vue de côté qui représente schématiquement la partie avant d'un avion de l'art antérieur ;
- la figure 2, déjà décrite, est une vue en coupe selon la ligne II-II de la figure 1 ;
- la figure 3 est une vue de côté, en coupe partielle, qui représente schématiquement la partie avant d'un avion conforme à l'invention ;
- la figure 4 est une vue en coupe selon la ligne IV-IV de la figure 3 ; et
- la figure 5 est une vue en perspective éclatée de la partie avant de l'avion, illustrée sur les figures 3 et 4.

### Exposé détaillé d'un mode de réalisation préféré de l'invention

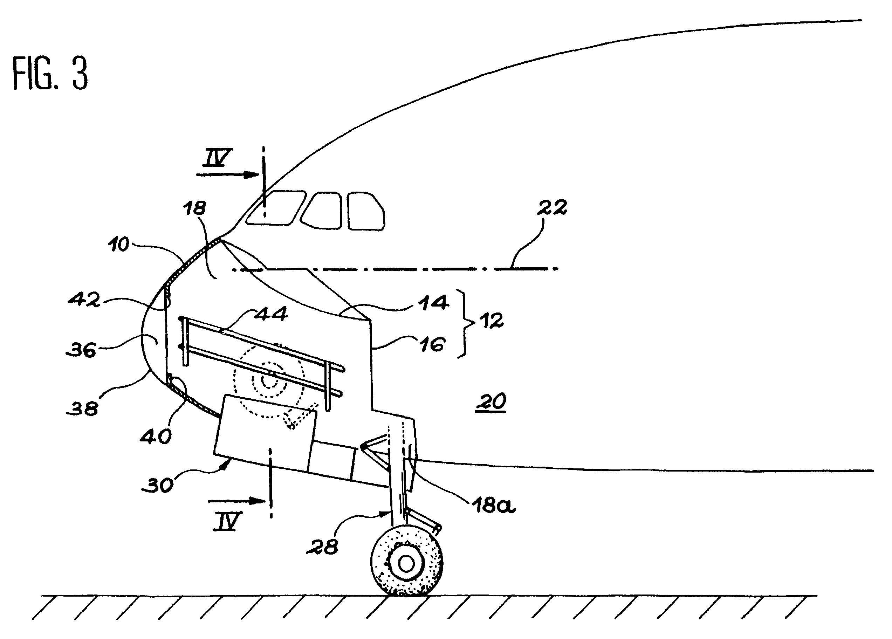

Les figures 3 à 5 illustrent un mode de réalisation préféré d'une structure avant d'avion conforme à l'invention. Une telle structure avant s'applique avantageusement à un avion gros porteur ou très gros porteur.

La référence 10 désigne la paroi formant l'enveloppe extérieure de la structure avant de l'avion. Le volume interne à l'avion, délimité extérieurement par la paroi 10, est divisé intérieurement en deux zones par une cloison de séparation étanche 12.

De façon plus précise, la cloison de séparation étanche 12 comprend un plafond 14 et une cloison arrière 16, dont les bords sont reliés l'un à l'autre ainsi qu'à la paroi 10. La zone située sous le plafond 14 et en avant de la cloison arrière 16 forme la partie inférieure extrême avant de la structure avant de l'avion. Conformément à l'invention, cette zone constitue la case de train 18 et elle n'est pas pressurisée.

La zone située au-dessus du plafond 14 et derrière la cloison arrière 16 constitue le compartiment pressurisé 20 de l'avion. Cette zone contient un plancher plan 22, situé au-dessus du plafond 14. Le plancher 22 soutient notamment le cockpit et les agencements commerciaux de l'avion. Le compartiment pressurisé 20 peut être agencé de façon quelconque, sans sortir du cadre de l'invention. Par conséquent, il n'en sera fait aucune description.

De préférence et comme on l'a illustré sur les figures 3 à 5, le plafond 14 est bombé vers le bas. Cette caractéristique permet au plafond 14 de supporter la différence de pression qui existe entre la case de train 18 non pressurisée et le compartiment pressurisé 20, sans qu'il soit nécessaire de lui donner des dimensions trop importantes.

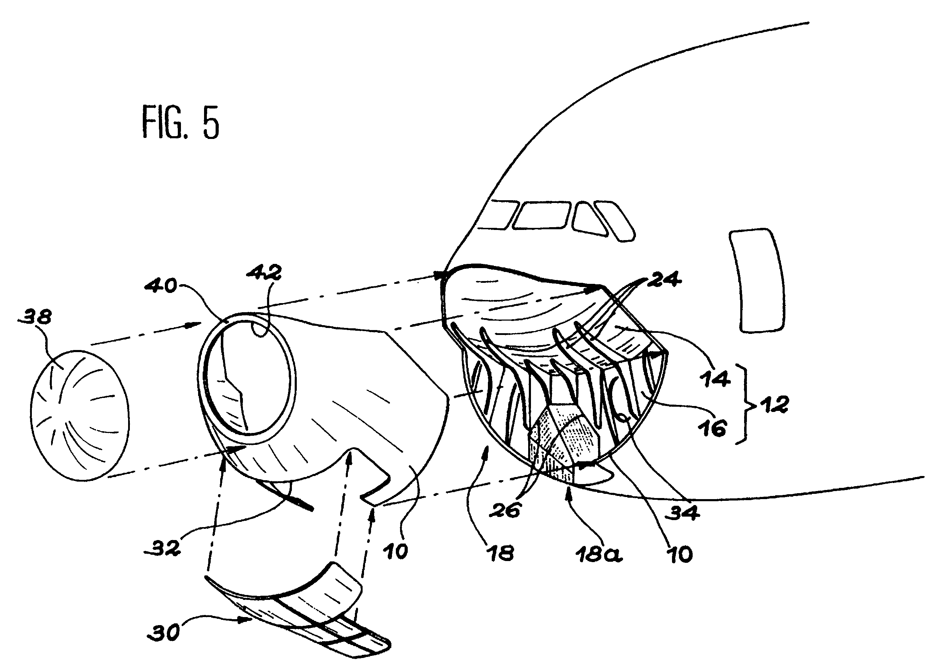

Pour une raison comparable, des raidisseurs 24 (figure 5) équipent avantageusement la cloison de séparation 12, par exemple du côté de la case de train 18. Dans le mode de réalisation représenté, ces raidisseurs 24 ont la forme d'équerres dont la branche inférieure sensiblement verticale prend appui sur la cloison arrière 16 et dont la branche supérieure sensiblement horizontale prend appui sur le plafond 14.

La case de train 18 comporte une extension vers l'arrière 18a, qui prolonge ladite case au-delà de la cloison arrière 16, dans la partie basse de la structure avant. Cette extension 18a, qui facilite en particulier l'accrochage de la jambe de train et la reprise des efforts, est délimitée notamment par deux cloisons latérales 26 (figure 5).

Dans la forme de réalisation illustrée sur la figure 5, les cloisons latérales 26 sont inclinées de façon à se rapprocher vers le haut. Cet agencement augmente l'espace disponible dans le compartiment pressurisé 20, de part et d'autre de l'extension 18a, entre celle-ci et la paroi 10.

Dans une variante de réalisation non représentée, les cloisons latérales 26 peuvent être sensiblement verticales. En effet, la grande taille de l'avion et la largeur réduite de l'extension 18a rendent de toute manière accessibles les espaces formés entre cette extension et la paroi 10.

La case de train 18, prolongée vers l'arrière par son extension 18a, permet de loger dans la structure avant de l'avion un train d'atterrissage avant 28 (figures 2 et 3) de grandes dimensions. L'agencement original de la case de train autorise ainsi l'utilisation d'un train d'atterrissage avant 28 dont les roues et les pneumatiques ont des tailles adaptées à l'importance des contraintes appliquées sur le train dans le cas d'un avion très gros porteur, dont la masse maximale au décollage peut notamment être supérieure à 500 tonnes. Une comparaison des figures 2 et 4, qui représentent l'une et l'autre une coupe de l'avion au droit des roues, dans l'état replié du train d'atterrissage avant, illustre clairement le gain dimensionnel autorisé par l'invention (figure 4), par rapport à l'art antérieur (figure 2).

De façon plus précise, le train d'atterrissage avant 28 est articulé dans l'extension 18a de la case de train 18. Il est amené dans sa position rentrée en pivotant vers l'avant de telle sorte que ses roues et ses pneumatiques soient logés en totalité à l'intérieur de la case de train 18. De façon habituelle, un ensemble de trappes 30 ferme alors une ouverture 32 pratiquée dans le bas de la paroi 10, en face de la case de train 18 et de son extension vers l'arrière 18a. Les dimensions de l'ouverture 32 sont adaptées pour permettre la sortie du train d'atterrissage avant 28, après ouverture des portes 30, à l'atterrissage.

Comme on l'a représenté schématiquement sur la figure 5, au moins une porte d'accès 34 est prévue dans la cloison arrière 16. Cette porte d'accès 34 permet d'accéder au compartiment pressurisé 20, en dessous du plancher 22, en passant par la case de train 18. De préférence, la porte d'accès 34 présente une forme sensiblement ovale, dont le grand axe est incliné sensiblement de façon verticale. Cette forme permet de ne pas pénaliser la tenue structurale de la cloison arrière 16. La porte 34 est placée entre deux raidisseurs 24 adjacents.

L'agencement original de la case de train 18 selon l'invention et la présence de la porte d'accès 34 dans la cloison arrière 16 permettent d'accéder au compartiment pressurisé 20, en arrière de la cloison 16, sans qu'aucune porte d'accès n'ait à être prévue sur la paroi extérieure 10 de l'avion. Par conséquent, la traînée aérodynamique inhérente à l'implantation d'une telle porte d'accès sur la paroi 10 est supprimée.

De façon habituelle, une chambre radar 36 forme le nez de la structure avant de l'avion. Cette chambre radar est délimitée vers l'avant par un radôme 38 qui prolonge sans discontinuité la paroi 10 de l'avion. Le radôme 38 est rapporté sur la paroi extérieure 10, de façon habituelle, par des moyens de fixation démontables (non représentés) tels que des vis et/ou des charnières.

A la différence des avions existants, la chambre radar 36 est immédiatement adjacente à la case de train 18, dont elle est séparée par une cloison avant 40. Au moins une ouverture d'accès 42, prévue dans la cloison avant 40, permet d'accéder à la chambre radar 36, notamment pour y effectuer des opérations de maintenance, depuis la case de train 18. Cet accès maintenance peut être effectué sous la pluie (quelles que soient les intempéries) l'avion à l'extérieur alors qu'aujourd'hui la maintenance de l'antenne radar nécessite d'abriter l'avion. Cet agencement permet d'effectuer les opérations de maintenance usuelles sans avoir à déposer le radôme 38. L'affleurement aérodynamique de ce dernier sur la paroi 10 de l'avion peut ainsi être préservé dans de meilleures conditions que sur les avions utilisant des solutions traditionnelles.

Il est à noter que l'agencement original de la case de train, immédiatement en arrière de la chambre radar 36, permet de placer la ou les roues du train d'atterrissage avant 28 à proximité de la cloison 40, dans l'état rentré du train.

Afin d'améliorer la sécurité lors de l'intervention du personnel au sol à l'intérieur de la case de train 18, une rambarde 44 (figure 3) chemine dans cette dernière. Plus précisément, la rambarde 44 comprend deux parties latérales qui s'étendent vers l'avant à partir de la cloison arrière 16, ainsi qu'une partie avant qui chemine transversalement le long de la cloison avant 40. La rambarde 44 permet notamment au personnel au sol d'intervenir en toute sécurité dans la chambre radar 36 et d'accéder en toute sécurité au compartiment pressurisé 20, en arrière de la cloison 16, par la porte d'accès 34.

La rambarde 44 peut aussi être utilisée pour tendre un filet (non représenté) près du plafond 14. Un tel filet permet d'éviter toute blessure de l'équipage ou endommagement du cockpit consécutif à la projection de morceaux du train d'atterrissage avant 28 vers le plafond 14, en cas d'éclatement des pneus ou de cassure d'une autre partie du train à l'atterrissage ou lors du roulage au sol.

L'accès à la case de train 18 est possible par un escalier mobile externe ou un chariot élévateur. Une échelle repliable embarquée (non représentée) peut aussi être placée à cet effet dans la case de train 18.

Bien entendu, l'invention n'est pas limitée au mode de réalisation préféré qui vient d'être décrit. Ainsi, la forme du plafond 14 et celle de la case de train 18 peuvent être différentes, sans sortir du cadre de l'invention.

## Revendications

1. Structure avant d'avion, comprenant un compartiment pressurisé (20) et une case de train (18) non pressurisée, apte à loger un train d'atterrissage avant (28), dans un état rentré de celui-ci, **caractérisée en ce que** la case de train (18) non pressurisée forme une partie inférieure extrême avant de ladite structure avant.

2. Structure avant d'avion selon la revendication 1, dans laquelle la case de train (18) est séparée du compartiment pressurisé (20) par un plafond (14) et une cloison arrière (16).

3. Structure avant d'avion selon la revendication 2, dans laquelle la case de train (18) comporte une extension vers l'arrière (18a), au-delà de ladite cloison arrière (16), le train d'atterrissage avant (28) étant articulé dans ladite extension vers l'arrière (18a), de façon à s'étendre vers l'avant dans la case de train (18) dans son état rentré.

4. Structure avant d'avion selon la revendication 3, dans laquelle ladite extension vers l'arrière (18a) comporte des cloisons latérales (26) inclinées de façon à se rapprocher vers le haut.

5. Structure avant d'avion selon la revendication 3, dans laquelle ladite extension vers l'arrière (18a) comporte des cloisons latérales (26) sensiblement verticales.

6. Structure avant d'avion selon l'une quelconque des revendications 2 à 5, dans laquelle le plafond (14) est bombé vers le bas.

7. Structure avant d'avion selon l'une quelconque des revendications 2 à 6, dans laquelle au moins une porte d'accès (34) est prévue dans la cloison arrière (16).

8. Structure avant d'avion selon la revendication 7, dans laquelle la porte d'accès (34) a une forme sensiblement ovale, de grand axe sensiblement vertical.

9. Structure avant d'avion selon l'une quelconque des revendications 2 à 8, dans laquelle des raidisseurs (24) équipent le plafond (14) et la cloison arrière (16).

10. Structure avant d'avion selon l'une quelconque des revendications précédentes, dans laquelle une chambre radar (36), délimitée extérieurement par un radôme (38), est prévue à l'avant de la case de train (18), et séparée de celle-ci par une cloison avant (40) munie d'au moins une ouverture d'accès (42).

11. Structure avant d'avion selon la revendication 10, dans laquelle le train d'atterrissage avant (28) est muni d'au moins une roue apte à être située à proximité de la cloison avant (40), dans l'état rentré dudit train.

12. Structure avant d'avion selon l'une quelconque des revendications 2 à 6, dans laquelle une rambarde (44) est placée dans la case de train (18).

13. Structure avant d'avion selon la revendication 12, dans laquelle la rambarde (44) supporte un filet de protection du plafond (14) de la case de train (18).

## Claims

1. Aircraft fore structure comprising a pressurized compartment (20) and an unpressurized landing gear compartment (18) that is suitable to house fore landing gear (28) in the retracted position, **characterized in that** the unpressurized landing gear compartment (18) constitutes a lower fore end section of said fore structure.

2. Aircraft fore structure of claim 1, wherein the landing gear compartment (18) is separated from the pressurized compartment (20) by a ceiling and a rear partition (16).

3. Aircraft fore structure of claim 2, wherein the landing gear compartment (18) comprises an extension towards the rear (18a), beyond said rear partition (16), the fore landing gear (28) being hinged in said extension towards the rear (18a) such that it extends towards the fore in the landing gear compartment (18) in the retracted position.

4. Aircraft fore structure of claim 3, wherein the said extension towards the rear (18a) comprises lateral partitions (26) that are sloped to meet near the top of the landing gear compartment.

5. Aircraft fore structure of claim 3, wherein said extension towards the rear (18a) comprises lateral partitions (26) that are more or less vertical.

6. Aircraft fore structure according to any one of the claims 2 to 5, wherein the ceiling (14) bulges downwards.

7. Aircraft fore structure according to any one of the claims 2 to 6, wherein at least one access door (34) is provided in the rear partition (16).

8. Aircraft fore structure of claim 7, wherein the access door (34) is more or less oval-shaped with a more or less vertical major vertical axis.

9. Aircraft fore structure according to any one of the claims 2 to 8, wherein stiffeners (24) reinforce the ceiling (14) and the rear partition (16).

10. Aircraft fore structure according to any one of the preceding claims, wherein a radar chamber (36), contained within a radome (38), is provided at the fore of the landing gear compartment (18) and wherein it is separated from said landing gear compartment by a fore partition (40) that is provided with at least one access opening (42).

11. Aircraft fore structure of claim 10, wherein the fore landing gear (28) is provided with at least one wheel that is suitable for being located near fore partition (40) when said landing gear is in the retracted position.

12. Aircraft fore structure according to any one of the claims 2 to 6, wherein a hand rail is located in the landing gear compartment.

13. Aircraft fore structure of claim 12, wherein the hand rail (44) bears a net for protecting the ceiling (14) of the landing gear compartment (18).

## Patentansprüche

1. Flugzeugvorderstruktur, umfassend ein unter Druck gesetztes Abteil (20) und einen nicht unter Druck gesetzten Fahrgestellkasten (18), der dazu ausgelegt ist, ein vorderes Fahrgestell (28) in seinem eingefahrenen Zustand aufzunehmen, **dadurch gekennzeichnet, dass** der nicht unter Druck gesetzte Fahrgestellkasten (18) einen untersten Vorderbereich der Stirnstruktur bildet.

2. Flugzeugvorderstruktur nach Anspruch 1, bei der der Fahrgestellkasten (18) von dem unter Druck gesetzten Abteil (20) durch eine Decke (14) sowie eine Rückwand (16) getrennt ist.

3. Flugzeugvorderstruktur nach Anspruch 2, bei der der Fahrgestellkasten (18) eine Verlängerung nach hinten (18a) über die Rückwand (16) hinaus umfasst, wobei das vordere Fahrgestell (28) in der Verlängerung nach hinten (18a) derart angelenkt ist, dass es sich in seinem eingefahrenen Zustand nach vorne in den Fahrgestellkasten (18) erstreckt.

4. Flugzeugvorderstruktur nach Anspruch 3, bei der die Verlängerung nach hinten (18a) Seitenwände (26) aufweist, die derart geneigt sind, dass sie sich nach oben hin einander annähern.

5. Flugzeugvorderstruktur nach Anspruch 3, bei der die Verlängerung nach hinten (18a) im Wesentlichen vertikale Seitenwände (26) aufweist.

6. Flugzeugvorderstruktur nach einem der Ansprüche 2 bis 5, bei der die Decke (14) nach unten gewölbt ist.

7. Flugzeugvorderstruktur nach einem der Ansprüche 2 bis 6, bei der wenigstens eine Zugangstür (34) in der Rückwand (16) vorgesehen ist.

8. Flugzeugvorderstruktur nach Anspruch 7, bei der die Zugangstür (34) eine im Wesentlichen ovale Form mit im Wesentlichen vertikaler Hauptachse aufweist.

9. Flugzeugvorderstruktur nach einem der Ansprüche 2 bis 8, bei der die Decke (14) und die Rückwand (16) mit Aussteifungselementen (24) ausgestattet sind.

10. Flugzeugvorderstruktur nach einem der vorhergehenden Ansprüche, bei der eine außen durch ein Radom (38) begrenzte Radarkammer (36) vor dem Fahrgestellkasten (18) vorgesehen und von diesem durch eine Vorderwand (40) getrennt ist, die mit wenigstens einer Zugangsöffnung (42) versehen ist.

11. Flugzeugvorderstruktur nach Anspruch 10, bei der das vordere Fahrgestell (28) mit wenigstens einem Rad ausgestattet ist, das dazu ausgelegt ist, im eingefahrenen Zustand des Fahrgestells in der Nähe der Vorderwand (40) angeordnet zu sein.

12. Flugzeugvorderstruktur nach einem der Ansprüche 2 bis 6, bei der im Fahrgestellkasten (18) ein Geländer (44) angeordnet ist.

13. Flugzeugvorderstruktur nach Anspruch 12, bei der das Geländer (44) ein Netz zum Schutz der Decke (14) des Fahrgestellkastens (18) trägt.
